# EUROPEAN PATENT APPLICATION

(11) **EP 2 151 164 A1**
(43) Date of publication of application: **10.02.2010**
(21) Application number: 08425526.4
(22) Date of filing: 30.07.2008
(51) Int. Cl.: A21C 5/08

(54) **Apparatus for cutting doughs into pieces**

(71) Applicant: Esmach S.p.A., 36040 Grisignano di Zocco (VI) (IT)
(72) Inventor: Carollo, Paolo, 36040 Sossano (Vicenza)§ (IT); Borinato, Stefano, 35030 Veggiano (Padova) (IT)
(74) Representative: Ponchiroli, Simone

(57) **Abstract**

An apparatus for cutting doughs into pieces comprises a dough containment tank (2) having an upper edge (12), and a lid (3) which can move between a closed position in which it closes the top of the tank (2) and an open position in which it allows free access to the tank (2). The apparatus (1) also comprises means for compressing the dough contained in the tank (2) and means for cutting the dough contained in the tank (2), as well as an annular surface (13) extending around the upper edge (12) of the tank (2). A removable annular insert (15) can be positioned so that it rests on the annular surface (13) around the upper edge (12) of the tank (2). A seal (16) integral with the insert (15) is positioned between the lid (3) and the annular surface (13) when the lid (3) is in the closed position.

## Description

The present invention relates to an apparatus for cutting doughs into pieces, of the type normally used in the food industry, and in particular in the bread-making/pastry-making sector.

Apparatuses for cutting doughs (also commonly known as dividers) normally comprise a tank, in which the dough can be inserted, closed at the top by a lid.

Inside the tank there are means for compressing the dough and means for cutting the dough, consisting, respectively of the bottom of the tank which can slide upwards driven by an actuator, and a plurality of blades which can come out towards the inside of the tank through openings made in the bottom.

Since when the dough is compressed the mass of air contained in the free part of the tank moves towards the outside, prior art apparatuses preferably have an annular seal, positioned around the tank so that it is squashed by the lid when the lid is closed. A suitable duct allows air to be discharged in a guided and controlled fashion.

Depending on the solutions, the seal may be either rigidly fixed around the tank or to the lid (as described for example in patent EP 1 520 476).

However, both of the prior art solutions have disadvantages in terms of both hygiene and costs.

As regards the former, the presence of a seal always results in the formation of zones where dirt may build up (flour, etc.) which, since the apparatus is intended for the food industry, require continuous thorough cleaning of the apparatus, consequently wasting time.

In terms of costs, another disadvantage is linked to the fact that in order to allow a seal to be fixed to the lid or to the base of the apparatus, during the production step specific machining must be carried out, consequently wasting time and material.

In this situation the technical purpose which forms the basis of the present invention is to provide an apparatus for cutting doughs into pieces which overcomes the above-mentioned disadvantages.

In particular, the present invention has for a technical purpose to provide an apparatus for cutting doughs into pieces which is simpler and less expensive to make than the conventional apparatuses.

The present invention also has for a technical purpose to provide an apparatus for cutting doughs into pieces which allows easy and rapid cleaning of the apparatus and in which zones where dirt may build up are reduced to a minimum.

The technical purpose specified and the aims indicated are substantially achieved by an apparatus for cutting doughs into pieces as described in the claims herein.

Further features and the advantages of the present invention are more apparent in the detailed description, with reference to the accompanying drawings which illustrate several preferred, nonlimiting embodiments of an apparatus for cutting doughs into pieces, in which:
- Figure 1 is an axonometric view of an apparatus made in accordance with the present invention without a removable insert;
- Figure 2 is an axonometric view of the apparatus of Figure 1 with the removable insert;
- Figure 3 is an enlarged view of the detail III of the apparatus of Figure 1;
- Figure 4 is an enlarged view of the detail IV of the apparatus of Figure 2;
- Figure 5 is an axonometric view of the removable insert of Figure 2;
- Figure 6 is a cross-section of a detail of the apparatus of Figure 2 according to the line VI - VI of Figure 4, with the apparatus lid in the closed position;
- Figures 7 to 10 illustrate four alternative embodiments of the detail of Figure 6.

With reference to the accompanying drawings the numeral 1 denotes as a whole an apparatus for cutting doughs into pieces in accordance with the present invention.

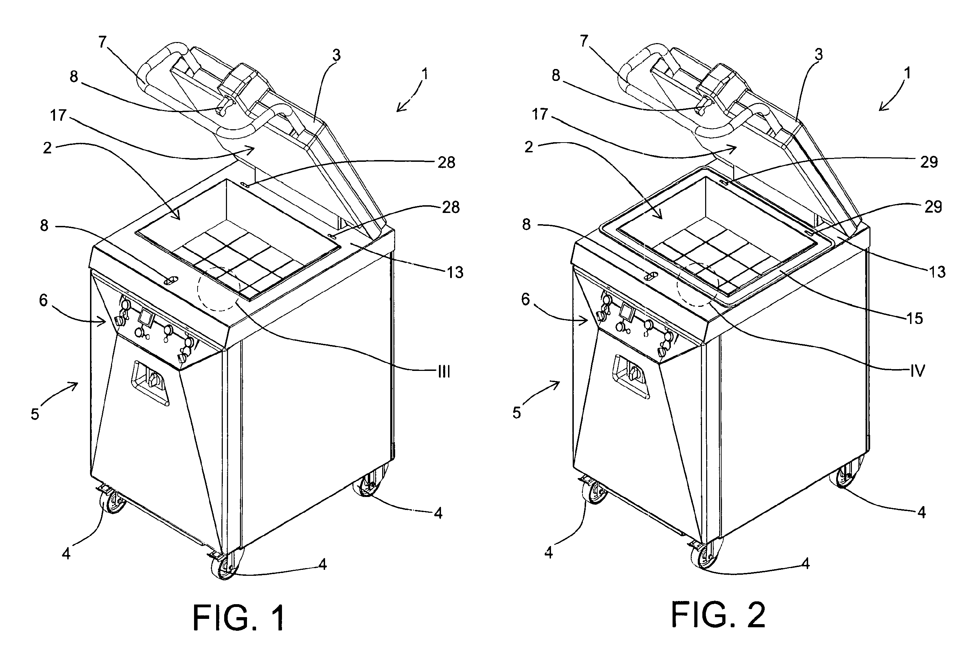

The apparatus 1 according to the present invention comprises, first, a containment tank 2 in which a dough to be cut into equal parts can be inserted. A lid 3 is connected to the top of the tank, the lid being able to move between a closed position in which it closes the top of the tank 2 (not illustrated) and an open position in which it allows free access to the tank 2 (Figures 1 and 2).

In the embodiment illustrated the apparatus 1 consists of a body mainly having the shape of a parallelepiped, mounted on wheels 4, in the upper part of which the tank 2 is made. The apparatus 1 has a front side 5 on which the control devices 6 are mounted, whilst the lid 3 is hinged about an axis (horizontal in practice) positioned close to the rear part of the upper side of the apparatus 1. In the known way, the lid 3 has a handle 7 for moving it, and there are hooking means 8 for rigidly connecting the lid 3 to the base of the apparatus 1 when the lid 3 is in the tank 2 closed position.

Means for compressing the dough contained in the tank 2 and means for cutting the dough are also operatively connected to the tank 2. The latter are also operatively connected to the compressing means. In particular, the compressing means preferably consist of the bottom 9 of the tank 2 which, in the known way, can move vertically inside the tank 2 when driven by a specific actuator, whilst the cutting means preferably consist, again in the known way, of a plurality of blades 10 arranged in a grid and able to project on command from the bottom 9 of the tank 2 through specific slits 11, driven by another actuator. In any case, since both the compressing means and the cutting means are of the known type, they are not described in further detail herein, nor are they illustrated in detail in the accompanying drawings.

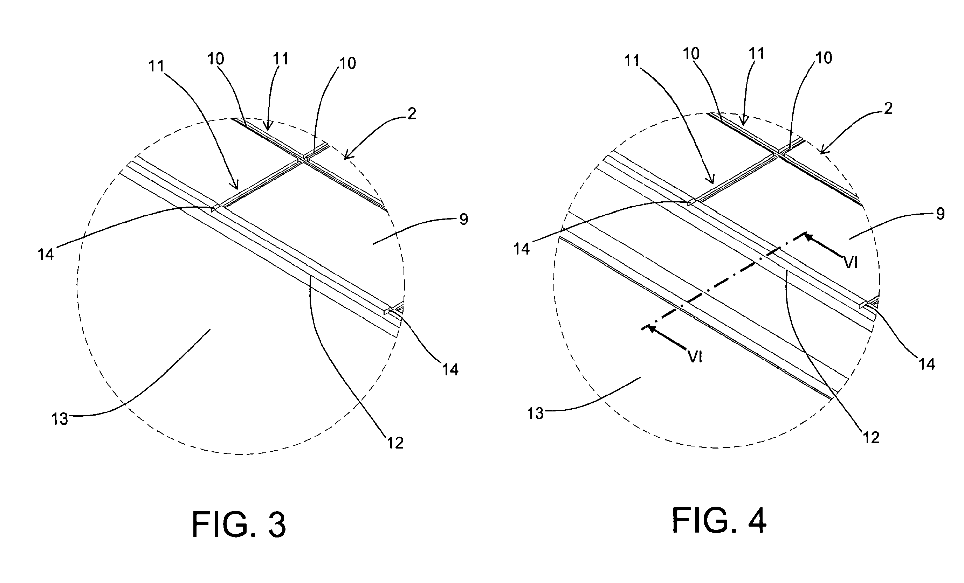

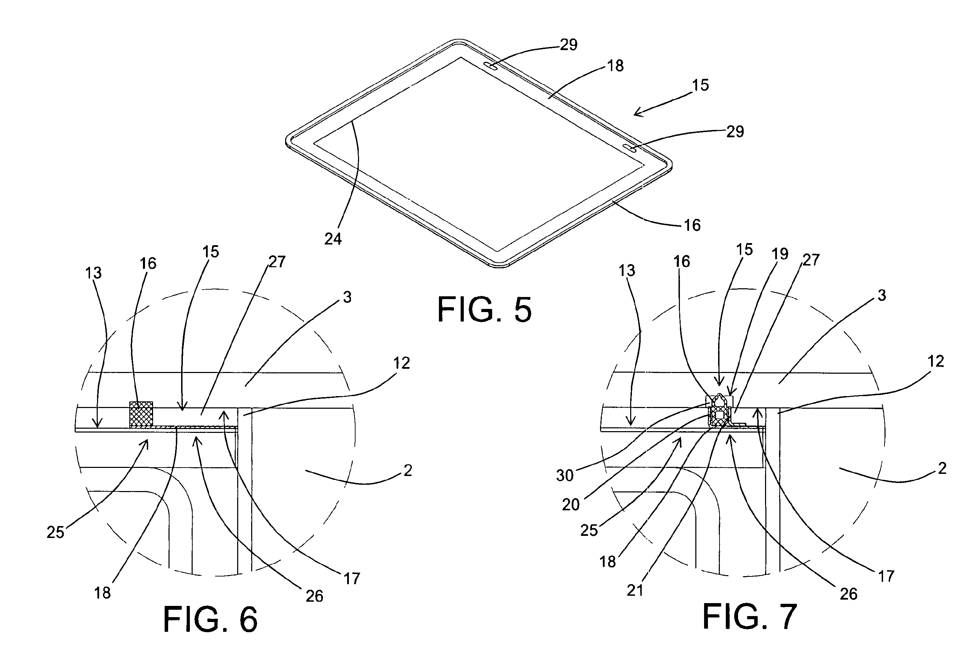

The dough containment tank 2 has an upper edge 12 around which a flat annular surface 13 extends. The upper edge 12 of the tank 2 preferably projects relative to the annular surface 13 in such a way that it is almost in contact with the lid 3 when the lid is in the closed position (Figures 6 to 10). As shown in Figure 3, to allow air out of the containment tank 2 when the dough is compressed, there is a plurality of transversal grooves 14 in the upper edge 12 of the tank 2.

In accordance with the present invention, the apparatus 1 also comprises a removable annular insert 15 which in the accompanying drawings has a mainly rectangular shape (Figure 5) and which can be rested on the annular surface 13 around the supper edge 12 of the tank 2. Integrally connected to said insert 15 there is a seal 16 which, when the insert 15 is resting on the flat surface and the lid 3 is in the closed position, is squashed between the lid 3 and the flat surface.

In the context of the present invention, the term seal 16 integral with the insert 15, or integrally connected to it, means both the case in which the insert 15 consists of only the seal 16, and the case in which the insert 15 also comprises other parts whether they are made in a single piece with the seal 16 or consist of separate elements.

Figures 6 to 10 are cross-sections of five different possible versions of the insert 15. In all of said figures, the insert 15 is shown when it is resting on the annular surface 13 with the lid 3 in the closed position. To show that, in said operating condition, the seal 16 must be squashed between the lid 3 and the base, in the accompanying Figures 6 to 10 the seal 16 is illustrated in its non-deformed condition and, consequently, interfering with the lower face 17 of the lid 3.

Depending on requirements, the insert 15 may have different shapes and structures.

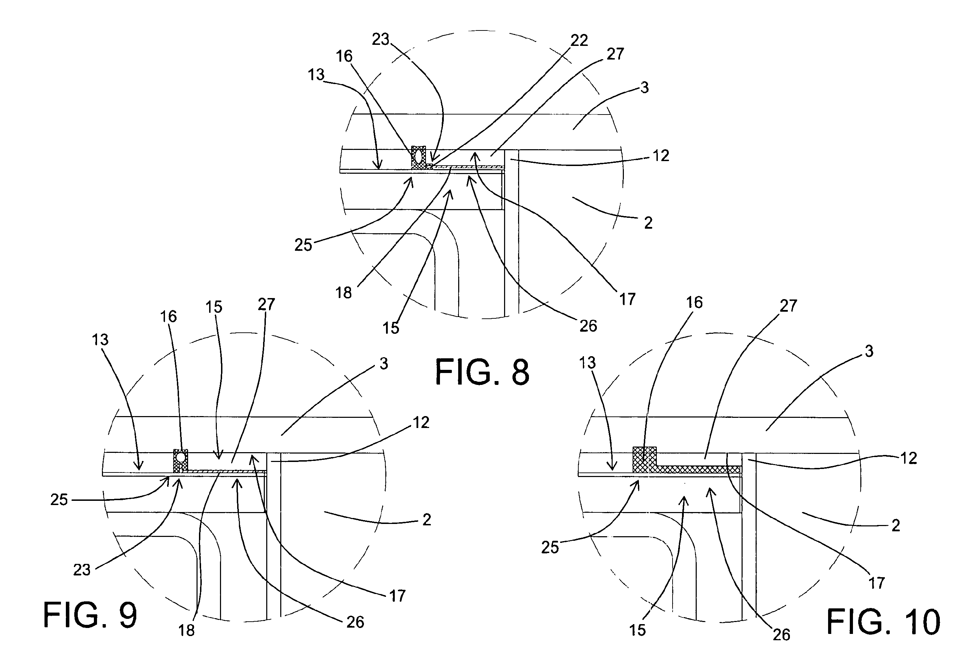

For example, in the embodiment illustrated in Figure 10, the insert 15 is entirely made of the same elastically deformable material that also forms the seal 16. However, in other embodiments, the insert 15 may consist of the seal 16 only.

In contrast, in the embodiments of Figures 6 to 9, the insert 15 comprises a rigid supporting structure 18 (which may be made for example of metal or plastic) to which the seal 16 is fixed.

In particular, in the embodiment in Figure 6 the seal 16 is fixed on a face (the upper face) of the rigid structure 18, for example by gluing. In this case the rigid structure 18 is an annular piece of material, flat and having substantially constant thickness which is significantly less than the thickness of the seal 16.

In contrast, in the embodiment in Figure 7 the seal 16 is inserted in a housing 19 formed by the rigid structure 18. The latter consists of a lower element 20 with L-shaped cross-section above which a smaller upper element 21 also with an L-shaped cross-section is fixed (for example by gluing or welding). The housing 19 for the seal 16 is formed between the two upward facing parts of the L shapes formed by the two elements 20, 21 (said parts extend perpendicularly to the annular surface 13).

In the embodiments in Figures 8 and 9, the rigid structure 18 is at least partly embedded in the seal 16. In the former case (Figure 8) this is achieved by inserting the outer edge 22 of a flat rigid structure 18 in a seat 23 formed by the seal 16 at its side facing the upper edge 12 of the tank 2. In the second case (Figure 9) instead the rigid structure 18 has an L-shaped cross-section and the part of the L shape facing upwards (that is to say, perpendicularly to the annular surface 13) is inserted in a seat 23 made in the part of the seal 16 which, in practice, faces the annular surface 13.

In the preferred embodiments the annular insert 15 has an inner edge 24 which is substantially shaped to match the projecting upper edge 12 of the tank 2, so that its positioning (centring) around the tank 2 can be performed with minimised play.

As shown in the accompanying drawings, again in the preferred embodiments, the insert 15 comprises a first annular portion 25 comprising the seal 16, and a second annular portion 26 adjacent to the first annular portion 25. The thickness of the second annular portion 26 is less than that of the first annular portion 25.

In particular, whilst in the embodiments in Figures 6 to 9 the second annular portion 26 is formed by the rigid structure 18, in the embodiment in Figure 10 it consists, as already indicated, of the same material as the seal 16.

The second annular portion 26 is preferably generally wider than the first annular portion 25, extending, with reference to the annular insert 15, in radial terms more internally than the first annular portion 25, and so forms the inner edge 24 of the insert 15.

In that way, when the insert 15 is mounted on the apparatus 1, the second portion guarantees the presence of a free space 27 between the upper edge 12 of the tank 2 and the seal 16 when the lid 3 is in the closed position.

Said free space 27 is used during compression of the dough to recover the air which comes out of the tank 2 through the transversal grooves 14 and then flows into the free space 27.

The apparatus 1 preferably also comprises at least one breather pipe (similar to the prior art ones and therefore not described in detail), two in the accompanying drawings, operatively connected to the tank 2 to allow venting of the air contained in the tank 2 when the compressing means compress the dough. As shown in Figure 1, each breather pipe has an inlet 28 made on the annular surface 13. In particular, the inlet 28 is made in a zone of the annular surface 13 which, when the insert 15 is resting on the annular surface 13, is between the upper edge 12 of the tank 2 and the seal 16.

Consequently, to allow air out, in the preferred embodiment the insert 15 also has at least one through-hole 29 (two in the accompanying drawings) which is aligned with the inlet 28 when the insert 15 is resting on the annular surface 13 (Figure 2). Said through-hole 29 therefore puts in communication the inlet 28 and the above-mentioned free space 27.

Therefore, in the embodiments illustrated, the through-hole 29 is made in the rigid supporting structure 18 and/or in the second annular portion 26.

Finally, depending on requirements, the lid 3 may have, on its lower face 17, at least one annular recess 30 forming a housing 19, in which the seal 16 is at least partly inserted when the lid 3 is in the closed position (Figure 7).

Operation of the apparatus 1 disclosed is similar to that of the prior art apparatuses as regards the cutting of doughs.

However, depending on requirements, the apparatus 1 may be used either with the seal 16 (for cutting doughs which have volatile components), or without the seal 16 (for cutting doughs which do not have volatile components).

Thus, in the former case, the insert 15 is placed so that it rests on the annular surface 13 around the upper edge 12 of the tank 2 and with the through-holes aligned with the inlets of the breather pipe, so that the air expelled from the tank 2 when the compressing means are operating passes through the transversal grooves 14 in the upper edge 12 and reaches the free space 27, from which it then goes into the breather pipes through the through-holes.

The present invention brings important advantages.

First, thanks to the present invention it is possible to use the seal only in cases in which it is necessary.

Second, making the seal separately simplifies production of the lid and/or the base of the apparatus and so reduces apparatus production costs.

Also, the fact that the seal is mounted on (or itself forms) a removable insert makes cleaning it much easier and safer because, on one hand, it can for example be washed directly under a tap or in an industrial dishwasher, and on the other hand, the apparatus has fewer points where dirt may build up compared with prior art apparatuses.

It should also be noticed that the present invention is relatively easy to produce and that even the cost linked to implementing the invention is not very high.

The invention described may be modified and adapted in several ways without thereby departing from the scope of the inventive concept.

Moreover, all details of the invention may be substituted with other technically equivalent elements and in practice all of the materials used, as well as the shapes and dimensions of the various components, may be any according to requirements.

## Claims

1. An apparatus for cutting doughs into pieces comprising:
a dough containment tank (2) having an upper edge (12);
a lid (3) which can move between a closed position in which it closes the top of the tank (2) and an open position in which it allows free access to the tank (2);
means for compressing the dough contained in the tank (2), said means being operatively connected to the tank (2);
means for cutting the dough contained in the tank (2), said means being operatively connected to the tank (2) and to the compressing means;
an annular surface (13) extending around the upper edge (12) of the tank (2); and
a seal (16) positioned between the lid (3) and the annular surface (13) when the lid (3) is in the closed position;
the apparatus being **characterised in that** it also comprises a removable annular insert (15) which can be positioned so that it rests on the annular surface (13) around the upper edge (12) of the tank (2), and also being **characterised in that** the seal (16) is integral with the removable insert (15).

2. The apparatus according to claim 1, **characterised in that** the insert (15) is completely made of the same elastically deformable material that is also used to make the seal (16).

3. The apparatus according to claim 1, **characterised in that** the insert (15) comprises a rigid supporting structure (18) to which the seal (16) is fixed.

4. The apparatus according to claim 3, **characterised in that** the seal (16) is fixed on one face of the rigid structure (18).

5. The apparatus according to claim 3, **characterised in that** the seal (16) is inserted in a housing (19) formed by the rigid structure (18).

6. The apparatus according to claim 1, **characterised in that** the rigid structure (18) is at least partly embedded in the seal (16).

7. The apparatus according to any of the foregoing claims, **characterised in that** the upper edge (12) of the tank (2) projects relative to the annular surface (13) and also being **characterised in that** the annular insert (15) has an inner edge (24) which is substantially shaped to match the projecting upper edge (12).

8. The apparatus according to any of the foregoing claims, **characterised in that** the insert (15) comprises a first annular portion (25) comprising the seal (16), and a second annular portion (26) adjacent to the first annular portion (25), the thickness of the second annular portion (26) being less than that of the first annular portion (25).

9. The apparatus according to claims 3 and 8, **characterised in that** the second annular portion (26) is formed by the rigid structure (18).

10. The apparatus according to claim 8 or 9, **characterised in that** the width of the second annular portion (26) is greater than that of the first annular portion (25).

11. The apparatus according to claim 8, 9 or 10 **characterised in that** the second annular portion (26) extends, with reference to the annular insert (15), in radial terms more internally than the first annular portion (25).

12. The apparatus according to claims 7 and 11, **characterised in that** the inner edge (24) of the insert (15) is formed by the second annular portion (26).

13. The apparatus according to any of the foregoing claims, **characterised in that** it also comprises at least one breather pipe operatively connected to the tank (2) to allow venting of the air contained in the tank (2) when the compressing means compress the dough, the breather pipe having at least one inlet (28) made on the annular surface (13) in a zone between the upper edge (12) of the tank (2) and the seal (16), the apparatus also being **characterised in that** the insert (15) also has at least one through-hole (29) which is aligned with the inlet (28) when the insert (15) is resting on the annular surface (13).

14. The apparatus according to claims 3 and 13, **characterised in that** the through-hole (29) is made in the rigid supporting structure (18).

15. The apparatus according to claims 8 and 13, **characterised in that** the through-hole (29) is made in the second annular portion (26).

16. The apparatus according to any of the foregoing claims, **characterised in that** the lid (3) has at least one annular recess (30) forming a housing (19), in which the seal (16) is at least partly inserted when the lid (3) is in the closed position.
